# EUROPEAN PATENT APPLICATION

(11) **EP 1 642 670 A1**
(43) Date of publication of application: **05.04.2006**
(21) Application number: 04745935.9
(22) Date of filing: 09.06.2004
(51) Int. Cl.: B23K 35/363

(54) **SOLDER PASTE**

(30) Priority: 09.06.2003 JP 2003163733
(71) Applicant: SENJU METAL INDUSTRY CO., LTD., Tokyo, 120-8555 (JP)
(72) Inventor: KATO, Rikiya, Souka-shi, Saitama 3400004 (JP); YAMAGATA, Sakie, Souka-shi, Saitama 3400022 (JP)
(74) Representative: Schrimpf, Robert
(86) International application number: PCT/JP2004/008383
(87) International publication number: WO 2004/108345

(57) **Abstract**

In reflow soldering using a solder paste formed by mixing a flux and a solder powder, the present invention suppresses the formation of voids and prevents the formation of large-diameter voids which have an adverse effect on the reliability of soldering. The flux contains a solder for which the temperature at which the decrease in mass measured by the TG method is 15 mass % is at least 5° C higher than the peak heat absorption temperature of the solder.

## Description

### Technical Field

This invention relates to a solder paste for reflow soldering, and in particular it relates to a solder paste for reflow soldering with which there is little formation of voids.

### Background Art

Due to the need for miniaturization and weight reductions, soldering of electronic parts and substrates of electronic devices is presently carried out primarily by reflow soldering using solder paste. Solder paste is a bonding material formed by mixing a solder powder with a paste-like flux. The paste-like flux typically has rosin as a main component and a small amount of added components (activators, thixotropic agents, and the like) which are dissolved in an organic solvent to obtain a suitable consistency.

Soldering using a solder paste is carried out by applying the solder paste to portions to be soldered, and then performing heating with a suitable heating means such as a reflow furnace, a laser beam, infrared rays, hot air, or a hot plate. Due to the heating, the flux component is vaporized and the solder powder melts and coagulates to adhere to portions to be soldered.

In the present invention, the reflow soldering method encompasses all types of soldering by applying a solder paste and heating in this manner. Thus, the heating means may be a means other than a reflow furnace. The heating temperature is a temperature at which the solder adequately melts. In order to reduce thermal shock to a substrate or electronic parts mounted thereon, the substrate is often preheated prior to this heating. In this case, the reflow heating is two-stage heating comprising preheating and main heating. The two stages of heating can be carried out by different heating apparatuses or by the same heating apparatus.

The application of solder paste is carried out by methods such as the printing method in which a solder paste is placed atop a metal mask having holes and is filled into the holes by a squeegee to transfer it to a substrate, the discharge method in which solder paste which is packed into a syringe is pushed out onto a substrate by a device referred to as a dispenser, and the pin transfer method in which a solder paste is transferred in small amounts at a time using transfer pins. Among these, the printing method is often employed because of its good productivity.

Compared to flow soldering using a molten solder or soldering using solder balls, reflow soldering using a solder paste has the drawback that voids are easily formed. The main cause of the formation of voids is that when solder powder melts and coagulates, the volatile flux components in the solder paste and particularly solvents are not rapidly removed from the solder. Namely, volatile flux components which are trapped inside the solder are heated and vaporized, and even if there is only a small amount thereof, the gas which is generated expands to a large volume and forms voids.

The reason why the formation of voids has intentionally been prevented in recent years is that as electronic equipment and electronic parts become miniaturized, soldering pads become minute, and voids which up to now have been permissible have come to have an adverse effect, resulting in variation in actual mounting area and a decrease in bonding strength. Namely, the location in which voids are formed, the shape of voids, and similar factors have a marked effect on the level of strains allowable during operation of equipment, and this affects the reliability of electronic equipment and electronic parts. In particular, large-diameter voids having a void diameter which is at least 30% of the electrode pad diameter of a substrate markedly worsen solder connections and therefore the reliability of electronic equipment and electronic parts.

Voids are often a problem particularly with substrates having a large printed area such as substrates for modules or substrates having minute printed areas such as BGA substrates. In the case of substrates having a large printed area such as substrates for modules, the amount of solder is large, so it takes time for the gas which is formed to diffuse. In the case of substrates having minute printed areas such as BGA substrates, the density of parts is high, so parts impede the diffusion of gas.

The best method of investigating the state of vaporization of volatile organic compounds is the TG method (thermal gravimetry method). The TG method is a method in which the mass of a sample is measured as a function of temperature as the temperature of the sample is changed according to a prescribed program (JIS K 0129). It can verify the phenomenon of a change in the weight of a sample due to evaporation from a sample, breakdown, oxidation, and the like accompanying a change in temperature. The TG method is thermal analysis which can accurately detect minute changes in mass.

Japanese Published Unexamined Patent Application Hei 9-64691 proposes a flux having a polyol component for which the temperature at which its mass as measured by the TG method becomes 0% is at least approximately 170° C (roughly corresponding to its boiling point) and at least the solidus temperature of solder. However, in that publication, there is no mention whatsoever concerning a solder paste having low formation of voids.

As a means of reducing voids in solder paste, it is conceivable to use in the flux which is employed a solvent which completely vaporizes at the time of preheating. A solvent is used in order to increase the printability of solder paste, and it becomes unnecessary at the completion of printing. However, if a solder paste is prepared using such a solvent which readily evaporates, the paste can readily dry atop the metal mask, viscosity increases during the course of continuous printing, and problems in printing can easily occur such as built-up on the squeegee in which paste no longer drops off the squeegee.

As conventional methods for decreasing voids in reflow soldering, Japanese Published Unexamined Patent Application Hei 9-277081 proposes a solder paste using a solvent for which the total amount of vaporization in the temperature range from the melting point of the solder to at most 30° C above the melting point of the solder is at least 70% of the total amount of vaporization.

However, the amount of vaporization of a solvent varies with the air temperature and the air pressure of the measurement environment, so it is difficult to specify a solvent which satisfies the above conditions. In that publication, there is no disclosure of any specific example of a solvent which satisfies those conditions. If one assumes an air temperature of 20° C and an air pressure of 760 mm Hg and applies them to reflow soldering of a Sn-Pb eutectic Sn-Pb solder with a melting point of 183 °C, a solvent which satisfies the above-described conditions becomes one for which the amount of vaporization in the temperature range of 183 - 213 ° C is at least 70% of the total amount of vaporization. Examples of such a solvent are 1-methyl-4-isopropyl-l-cyclohexene-8-ol and diethylene glycol monobutyl ether. However, these solvents readily dry atop a metal mask and easily cause problems in printing. In addition, according to results confirmed by experiments by the present inventors, even if such solvents are used, as described below, the effect of preventing the formation of voids is inadequate.

### Disclosure of the Invention

The present invention provides a solder paste which has low formation of voids even with substrates having a large printed area such as substrates for modules or substrates having minute printed areas such as BGA substrates and which in particular can prevent the formation of large-diameter voids with certainty and which has good continuous printability.

As a result of investigating by the TG method various types of solvents for use in fluxes, the present inventors found that by suitably selecting the relationship between the temperature at which the mass begins to decrease substantially linearly on a TG curve (a curve showing the percent of mass decrease with respect to temperature when the temperature is increased at a constant rate) and the melting temperature of solder, the formation of voids can be suppressed, and the formation of large-diameter voids can be prevented.

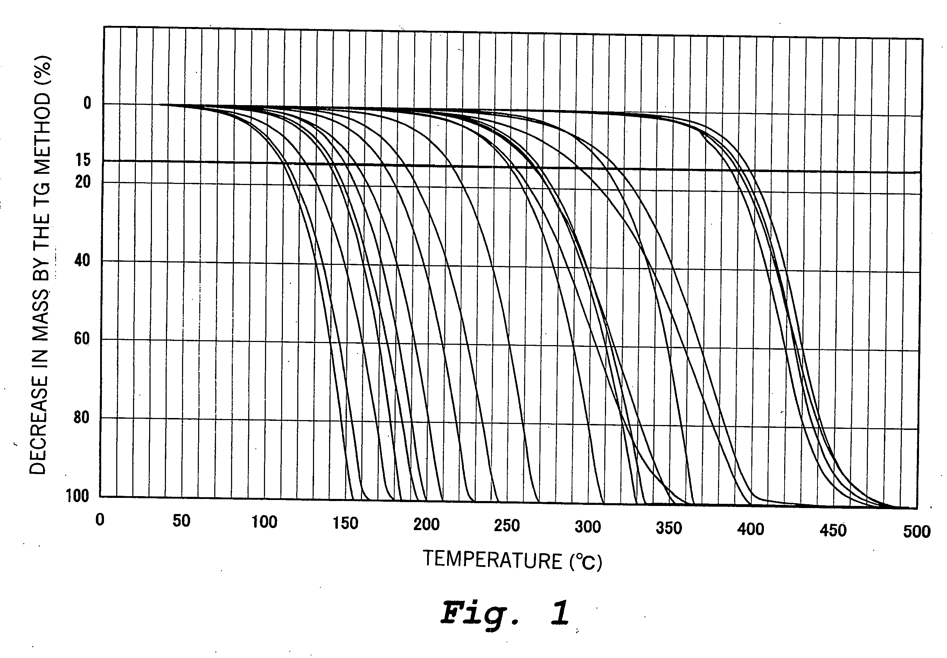

When various types of solvents which can be used in fluxes for solder paste and which have a boiling point of at least 150 °C are measured by the TG method, as shown in Figure 1, as the temperature increases, the decrease in mass is initially gradual, but from when the decrease in mass is approximately 15 mass %, the mass abruptly decreases along roughly a straight line. In the present invention, the temperature at which the decrease in mass on a TG curve becomes 15 mass % is used as a criterion.

A TG curve varies in accordance with the measurement conditions. In the present invention, the TG measurement conditions are a rate of temperature increase of 10° C per minute and a nitrogen gas current of 300 ml per minute.

The present invention relates to a solder paste in which a flux is mixed with a solder powder. A solvent contained in the flux primarily comprises a solvent for which the temperature at which the mass decrease in measurement by the TG method (on a TG curve) becomes 15 mass % is at least 5 °C higher than the peak heat absorption temperature of the solder powder.

If a solder is a eutectic alloy, its solidus temperature and the liquidus temperature are the same, so the melting point of the solder alloy is a fixed temperature. For example, with a Sn-37Pb eutectic solder, the solidus temperature and the liquidus temperature are both 183 °C, so this is the melting point. However, when a solder does not have a eutectic composition, the solidus temperature is different from the liquidus temperature, and in the temperature range between the solidus temperature and the liquidus temperature, a liquid phase and a solid phase coexist. For example, a Sn-3Ag-0.5Cu alloy which is used as a lead-free solder has a solidus temperature of 217 °C and a liquidus temperature of 220 °C.

In other words, a solder other than a eutectic one does not exhibit a definite melting temperature. In the present invention, the peak heat absorption temperature is used as an indicator of the melting temperature. The peak heat absorption temperature is the temperature at which the heat absorption due to melting at the time of a temperature increase is a peak on a DSC (differential scanning calorimetry) chart. It is located between the solidus temperature and the liquidus temperature. For example, in the case of the above-described Sn-3Ag-0.5Cu alloy, the peak heat absorption temperature is 218° C. The peak heat absorption temperature can be easily found from a DSC chart. In the case of a eutectic solder, the melting temperature becomes the peak heat absorption temperature. In the present invention, the measurement conditions for DSC are a rate of temperature increase of 10 ° C per minute.

For each of the solvents shown in Table 1, the relationship between its boiling point and the temperature at which the decrease in mass becomes 15 mass % on a TG curve (below, this temperature will be abbreviated as the TG-15 temperature) is shown in Table 1. TG measurement was carried out using a TG/DTA manufactured by Seiko Instruments. The boiling point was the value at 760 mm Hg. The boiling points for vegetable oils and mineral oils could not be specified because they varied from one lot to another.

**TABLE 1**

| Name of solvent | b.p. (°C) | TG-15* (°C) |
|---|---|---|
| dibutyl maleate | 280 | 155 |
| liquid paraffin | 300 | 265 |
| olive oil | - | 392 |
| rapeseed oil | - | 390 |
| safflower oil | - | 397 |
| sunflower oil | - | 384 |
| Hitherm 32 (mineral oil heat transfer medium) | - | 254 |
| Hitherm 68 (mineral oil heat transfer medium) | - | 294 |
| Hitherm 100 (mineral oil heat transfer medium) | - | 316 |
| isobornyl cyclohexanol | - | 309 |
| tetraethylene glycol | 327 | 214 |
| diethylene glycol monohexyl ether | 259 | 141 |
| dioctyl sebacate | 248 | 265 |
| dibutyl sebacate | 345 | 206 |
| dioctyl phthalate | 284 | 380 |
| diethyl phthalate | 295 | 172 |
| Sekisui 90 (plasticizer for vinyl chloride resin) | 390 | 269 |
| 2-ethyl-1,3-hexanediol | 244 | 148 |
| ethylene glycol monophenyl ether | 245 | 138 |
| 1-methyl-4-isopropyl-cyclohexene-8-ol | 218 | 112 |
| 1,2-dihydroxy butane | 190 | 110 |
| isohexadecanol | 304 | 186 |
| benzyl benozate | 324 | 213 |
| butyl benzoate | 185 | 130 |
| diethylene glycol monobutyl ether | 230 | 124 |

| | | |
|---|---|---|
| *The temperature at the time of a 15% mass decrease measured by the TG method. | | |

As can be seen from Table 1, there is not always a correlation between the temperature of the boiling point of a solvent and the TG-15 temperature. Namely, even if the boiling point is high, there exist solvents for which the TG-15 temperature is relatively low and those for which the opposite is the case.

A solvent contained in a flux for a solder paste is necessary in order to give the solder paste the consistency necessary for transfer such as printing with a metal mask or discharge from a dispenser. However, it becomes unnecessary after the solder paste is applied to a substrate. Therefore, with a conventional ordinary solder paste, the solvent contained in flux is selected so as to evaporate during preheating and main heating of reflow. However, if a solder paste is prepared from a flux containing a large amount of a solvent which is selected in this manner, as shown in the subsequent examples, the formation of voids cannot be suppressed, and a large number of large-diameter voids are formed.

According to the present invention, by using a solvent having a TG-15 temperature which is at least 5° C higher than the peak heat absorption temperature of a solder as a solvent for a flux, the solvent which vaporizes by the time the solder melts is at most 15 mass %, and considerable vaporization of the solvent takes place after the solder paste has completely melted and the solder is exhibiting wettability. Therefore, the solvent is smoothly removed from the molten solder, and the formation of voids by the solvent is markedly suppressed, and in particular the formation of large-diameter voids can be substantially entirely prevented.

With a solvent like that described in Japanese Published Unexamined Patent Application Hei 9-64691 for which the temperature at the time that the mass measured by the TG method becomes 0% is at least the solidus temperature, there is the possibility of the solvent substantially completely vaporizing by the time that the solder melts. With a solvent like that described in Japanese Published Unexamined Patent Application Hei 9-277081 in which the amount of vaporization in the temperature range from the melting point of the solder to at most 30° C above the melting point of the solder is at least 70% of the total amount of vaporization, the amount of solvent which vaporizes by the time that the solder melts is too great, and the effect of suppressing the formation of voids like that obtained by the present invention cannot be obtained.

The reflow heating conditions of a solder paste are frequently set such that the maximum temperature of main heating (the peak heating temperature) is a temperature which is 10 - 50 ° C higher than the peak heat absorption temperature of the solder. With a solder paste according to the present invention, due to the delay in the vaporization of the solvent in the flux at the time of reflow, the formation of voids can be suppressed. For this purpose, the TG-15 temperature of the solvent can be a temperature which is at least 5 °C above the peak heat absorption temperature of the solder. Preferably a solvent is used which has a TG-15 temperature which is at least 10° C higher than the peak heat absorption temperature of the solder.

There is no particular restriction on the upper limit of the TG-15 temperature of the solvent. When the TG-15 temperature is significantly higher (such as at least 30° C higher) than the peak heat absorption temperature of the solder, the solvent may only partially vaporize during reflow heating, or in some cases there may be substantially no vaporization at all. In this case, the solvent in a liquid state is pushed away to the periphery at the time of melting and coagulation of the solder powder, and it becomes flux residue together with flux components other than the solvent which did not vaporize (such as rosin, thixotropic agents, and activators). The flux residue can be removed by cleaning with a suitable cleaning agent after soldering.

### Brief Description of the Drawing

Figure 1 is a graph showing the results of measurements (a TG curve showing the relationship between temperature and decrease in mass) of various solvents by the TG method.

### Best Mode for Carrying Out the Invention

There are no particular restrictions on a flux and solder powder used in a solder paste according to the present invention except that a solvent used in the flux has a specific TG-15 temperature as described above.

The solder powder may be either a Sn-Pb base solder or a lead-free solder. The particle size of the solder powder can be in the range of 0.1 - 60 micrometers, and preferably it is in the range of 5 - 35 micrometers. The solder powder may be one which generates a small amount of α rays and has an α ray count of at most 0.5 cph/cm². Such a solder powder can be manufactured using high quality raw materials and/or refined raw materials.

The flux may be a rosin flux or a non-rosin flux, but usually it is a rosin flux. The rosin which is the main component of a rosin flux can be selected from rosin and various types of modified rosins such as polymerized rosins. In addition to rosin and a solvent, a rosin flux may further include added components such as an activator (such as an amine salt and particularly an amine hydrobromide), a thixotropic agent, or a thickener (such as hydrogenated castor oil). One or two or more of each flux component can be used.

The blending ratio of solder powder and flux in the solder paste in terms of the mass ratio of solder powder to flux is normally in the range of 95:5 - 85:15.

In the present invention, a solvent having a TG-15 temperature (the temperature when a decrease in mass on a TG curve is 15 mass %) which is at least 5° C higher and preferably at least 10° C higher than the peak heat absorption temperature of the solder is used as a solvent for the flux. Specific examples of such a solvent are listed below for different levels of the peak heat absorption temperature of the solder.
(1) In the case of a high temperature solder having a peak heat absorption temperature of 250 - 330° C [for example, a Sn-95Pb solder (solidus temperature of 300°C, liquidus temperature of 314° C, peak heat absorption temperature of 310° C)], suitable solvents having a TG-15 temperature higher than that can be selected from vegetable oils and mineral oils. Examples of such vegetable oils are sunflower oil, olive oil, safflower oil, rapeseed oil, soybean oil, corn oil, tsubaki oil, peanut oil, perilla oil, sesame oil, rice oil, cottonseed oil, palm oil, avocado oil, and grapeseed oil. An example of a suitable mineral oil is Hitherm 100 (made by Shin Nippon Sekiyu).
(2) In the case of intermediate temperature solders having a peak heat absorption temperature of 175° C to less than 250° C [such as Sn-37Pb solders (solidus temperature = liquidus temperature = peak heat absorption temperature = 183 °C) or a Sn-3Ag-0.5Cu lead-free solder (solidus temperature of 217 °C, liquidus temperature of 220 °C, peak heat absorption temperature of 218 °C)], the vegetable oils and mineral oil listed above in (1) can be used, but solvents having a lower TG-15 temperature can also be used. Examples of other solvents which can be used are mineral oils such as Hitherm 68 and Hitherm 32 (both manufactured by Shin Nippon Sekiyu), liquid paraffin, isobornyl cyclohexanol, Sekisui-cizer 90 (a plasticizer for vinyl chloride manufactured by Sekisui Chemical Co., Ltd.), dioctyl phthalate, dioctyl sebacate, dibutyl sebacate, tetraethylene glycol, and isohexadecanol.
(3) In the case of low temperature solders having a peak heat absorption temperature of less than 175 °C [for example, Sn-1Ag-57Bi solder (solidus temperature of 138 °C, liquidus temperature of 204 °C, peak heat absorption temperature of 139° C)], the solvents listed above in (1) and (2) can be used, but it is also possible to use a solvent having a lower TG-15 temperature. Examples of other solvents which can be used are dibutyl phthalate, dibutyl maleate, and benzyl benzoate.

One or two or more of the above-described solvents having a TG-15 temperature which is higher than the peak heat absorption temperature of the solder may be used. A solvent having a TG-15 temperature which is lower than the peak heat absorption temperature of the solder may also be used as a portion of the solvent in an amount within a range which does not markedly impair the effects of the present invention and preferably in an amount of at most 30 mass % of the overall solvent.

For example, a solvent having a TG-15 temperature of lower than 150° C can be used with respect to any of the solders described above in (1) - (3) as long as the amount is preferably at most 30 mass % of the overall solvent. Examples of such solvents are diethylene glycol monobutyl ether, diethylene glycol monohexyl ether, 2-ethyl-1,3-hexenediol, and butyl benzoate.

The amount of solvent in the flux may be an amount sufficient to impart a consistency suitable for application of a solder paste. In the case of a rosin flux, typically the flux contains 30 - 70 mass % and preferably 35 - 65 mass % of a solvent. In the present invention, preferably at least 70 mass % of this solvent is constituted by a solvent having a TG-15 temperature which is at least 5° C higher than the peak heat absorption temperature of the solder.

### Examples

The following examples illustrate the present invention, but the present invention is not limited by the examples. In the examples, unless otherwise specified, percent means mass percent. The numbers in the alloy composition of the solder mean the content in mass percent.

A total of 28 types of solder paste were prepared by mixing each of the below-described four types of solder powder A - D with the below-described seven types of rosin flux a - g. When the solder was a Sn-37Pb eutectic solder, flux (6) was a flux satisfying the conditions set forth in Japanese Published Unexamined Patent Application Hei 9-277081. Flux g was a usual flux for a solder paste.

The mass ratio of the flux and the solder powder was as shown below for each solder such that the volume ratio was approximately 1:1.

### (Solder powder)

### Solder powder A

Composition: Sn-95Pb (peak heat absorption temperature of 310 °C), particle size: 15 - 25 *µ*m
Proportions in mixture: 9.5 % flux, 90.5 % solder powder

### Solder powder B

Composition: Sn-37Pb (peak heat absorption temperature of 183°C), particle size: 15 - 25 *µ*m
Proportions in mixture: 10 % flux, 90 % solder powder

### Solder powder C

Composition: Sn-3Ag-0.5Cu (peak heat absorption temperature of 218°C), particle size: 15 - 25 *µ*m
Proportions in mixture: 11 % flux, 89 % solder powder

### Solder powder D

Composition: Sn-1Ag-57Bi (peak heat absorption temperature of 139°C), particle size: 15 - 25 *µ*m
Proportions in mixture: 11 % flux, 89 % solder powder

### (Flux)

For fluxes a - g, hydrogenated castor oil was used as a thixotropic agent, and diphenylguanidine hydrobromide was used as an activator. The temperatures in parentheses are the TG-15 temperature for each solvent.

**Flux a**

| | |
|---|---|
| polymerized rosin | 40% |
| hydrogenated castor oil | 5% |
| diphenylguanidine hydrobromide | 2% |
| safflower oil (397°C) | 40% |
| diethylene glycol monobutyl ether (124°C) | 10% |
| butyl benzoate (130°C) | 3% |

**Flux b**

| | |
|---|---|
| polymerized rosin | 40% |
| hydrogenated castor oil | 5% |
| diphenylguanidine hydrobromide | 2% |
| Hitherm 32 (mineral oil, 254 °C) | 40% |
| diethylene glycol monobutyl ether (124 °C) | 10% |
| butyl benzoate (130°C) | 3% |

**Flux c**

| | |
|---|---|
| polymerized rosin | 40% |
| hydrogenated castor oil | 5% |
| diphenylguanidine hydrobromide | 2% |
| liquid paraffin (265°C) | 40% |
| diethylene glycol monohexyl ether (141°C) | 10% |
| butyl benzoate (130°C) | 3% |

**Flux d**

| | |
|---|---|
| polymerized rosin | 40% |
| hydrogenated castor oil | 5% |
| diphenylguanidine hydrobromide | 2% |
| isohexadecanol (186°C) | 40% |
| diethylene glycol monohexyl ether (141°C) | 10% |
| butyl benzoate (130°C) | 3% |

**Flux e**

| | |
|---|---|
| polymerized rosin | 40% |
| hydrogenated castor oil | 5% |
| diphenylguanidine hydrobromide | 2% |
| dibutyl maleate (155°C) | 40% |
| diethylene glycol monohexyl ether (141°C) | 10% |
| butyl benzoate (130°C) | 3% |

**Flux f (Japanese Published Unexamined Patent Application Hei 9-277081)**

| | |
|---|---|
| polymerized rosin | 50% |
| hydrogenated castor oil | 5% |
| diphenylguanidine hydrobromide | 2% |
| 1-methyl-4-isopropyl-cyclohexene-8-ol (112°C) | 40% |
| butyl benzoate (130°C) | 3% |

**Flux g (usual flux)**

| | |
|---|---|
| polymerized rosin | 50% |
| hydrogenated castor oil | 5% |
| diphenylguanidine hydrobromide | 2% |
| diethylene glycol monohexyl ether (141°C) | 40% |
| butyl benzoate (130°C) | 3% |

The continuous printability and the rate of void formation were evaluated for these solder pastes by the below-described test methods. The test results are shown in Table 2 along with the TG-15 temperature of the main solvent in the flux (the solvent present in the largest amount), the peak heat absorption temperature of the solder, and the temperature difference therebetween.

### Test methods

### Continuous printability

Using a solder paste which was prepared using solder powder B (Sn-37Pb eutectic solder), continuous printability was evaluated by printing the solder paste on a substrate under the following conditions.
Printing pressure: 1.0 kg/cm²
Squeegee: metal squeegee
Thickness of metal mask: 60 micrometers (laser-machined)
Diameter of holes in mask: 160 micrometers, 108 chips (34992 dots)
Pad diameter: 100 micrometers

The percent of dots printed properly and the state of build-up of solder paste on the squeegee were ascertained after 8 hours of continuous printing, and printability was evaluated by the following standards.
○: No build-up of solder paste on the squeegee occurred and the percent of dots printed properly was at least 70 %.
Δ: No build-up of solder paste on the squeegee occurred, but the percent of dots printed properly was less than 70%.
× : Build-up of solder paste on the squeegee occurred, and printing could not be performed.

### Rate of void formation

Each solder paste was printed on a substrate under the same conditions as for the continuous printability test, reflow heating was performed under the following conditions, and then the substrate was cleaned with PINE ALPHA ST-100S manufactured by Arakawa Chemical Co.

### Reflow conditions:

Reflow apparatus (Model CX-85 using infrared ray heating, manufactured by Senju Metal Industry Co., Ltd.)
Preheating: 150 - 170 °C for 1 minute
Peak temperature main heating: Varied as described below for each solder
A: Sn-95Pb solder: 330° C
B: Sn-37Pb solder: 220° C
C: Sn-3Ag-0.5Cu solder: 235° C
D: Sn-1Ag-57Bi solder: 170 °C

After reflow, the soldered pads were observed with an x-ray transmission apparatus, and for 500 randomly selected pads, the below-described items (1) - (3) were investigated and the formation of voids was evaluated.
(1) Maximum void diameter
(2) Number of large-diameter voids: the number of voids for which the void diameter was at least 30% (= at least 30 micrometers) of the pad diameter
(3) Total number of voids

**TABLE 2**

| Paste No. | Solder powder (peak T¹) | Flux | | Δ³ (°C) | Printability | Maximum void diameter (*µ*m) | No. of large-diameter voids | Total no. of voids | Comments⁴ |
|---|---|---|---|---|---|---|---|---|---|
| | | Symbol | TG-15² | | | | | | |
| 1 | A: Sn-95Pb (310 °C) | a | 397 °C | 87 | N.D.⁵ | 19 | 0 | 28 | invention |
| 2 | | b | 254 °C | -56 | N.D. | 38 | 14 | 44 | comparative |
| 3 | | c | 265 °C | -45 | N.D. | 34 | 10 | 52 | comparative |
| 4 | | | 186 °C | -124 | N.D | 41 | 28 | 61 | comparative |
| 5 | | e | 155 °C | -155 | N.D. | 46 | 31 | 85 | comparative |
| 6 | | f | 112 °C | -198 | N.D. | 54 | 211 | 451 | comparative |
| 7 | | g | 141 °C | -169 | N.D. | 65 | 309 | 467 | comparative |
| 8 | B:Sn-37Pb (183 °C) | a | 397 °C | 214 | ○ | 20 | 0 | 18 | invention |
| 9 | | b | 254 °C | 71 | ○ | 21 | 0 | 23 | invention |
| 10 | | c | 265 °C | 82 | ○ | 20 | 0 | 16 | invention |
| 11 | | d | 186 °C | 3 | ○ | 33 | 17 | 54 | comparative |
| 12 | | e | 155 °C | -28 | ○ | 35 | 28 | 59 | comparative |
| 13 | | f | 112 °C | -71 | × | 39 | 188 | 388 | comparative |
| 14 | | g | 141 °C | -42 | ○ | 48 | 244 | 336 | comparative |
| 15 | C:Sn-3Ag-0.5Cu (218 °C) | a | 397 °C | 179 | N.D. | 24 | 0 | 22 | invention |
| 16 | | b | 254 °C | 36 | N.D. | 22 | 0 | 47 | invention |
| 17 | | c | 265 °C | 47 | N.D. | 21 | 0 | 38 | invention |
| 18 | | d | 186 °C | -32 | N.D. | 35 | 23 | 66 | comparative |
| 19 | | e | 155 °C | -63 | N.D. | 41 | 19 | 65 | comparative |
| 20 | | f | 122 °C | -106 | N.D. | 42 | 146 | 412 | comparative |
| 21 | | g | 141 °C | -77 | N.D. | 52 | 351 | 448 | comparative |
| 22 | D:Sn-1Ag-57Bi (139 °C) | a | 397 °C | 258 | N.D. | 22 | 0 | 31 | invention |
| 23 | | b | 254 °C | 241 | N.D. | 20 | 0 | 29 | invention |
| 24 | | c | 265 °C | 126 | N.D. | 26 | 0 | 41 | invention |
| 25 | | d | 186 °C | 47 | N.D. | 24 | 0 | 17 | invention |
| 26 | | e | 155°C | 16 | N.D. | 26 | 0 | 27 | invention |
| 27 | | f | 122 °C | -27 | N.D. | 38 | 96 | 411 | comparative |
| 28 | | g | 141 °C | 2 | N.D. | 49 | 187 | 376 | comparative |

| | | | | | | | | | |
|---|---|---|---|---|---|---|---|---|---|
| ¹peak heat absorption temperature of solder; | | | | | | | | | |
| ²TG-15 temperature (namely, temperature at which mass decrease is 15% on a TG curve) of main solvent; | | | | | | | | | |
| ³Δ = value of [TG-15] - [peak T] (a value of at least 5 for examples of this invention); | | | | | | | | | |
| ⁴invention = example of present invention, comparative = comparative example; | | | | | | | | | |
| ⁵N.D. = not measured | | | | | | | | | |

A solder paste according to the present invention for which the value of Δ in Table 2 was at least 5 had excellent printability, and there was no build-up on the squeegee during continuous printing. In addition, the total number of voids which were formed was low, the maximum void diameter was a small value of at most 26 *µ*m, and in particular, there was no formation of large-diameter voids which markedly affect the reliability of a substrate. Accordingly, impairment of the reliability of a substrate due to void formation could be avoided. As can be seen from Table 2, a solder paste according to the present invention is effective with respect to many types of solders ranging from high temperature solders to low temperature solders.

Among the solder powders used in the examples, a portion of the solder powders had an α ray count of at most 0.5 cph/cm². In the case of solder pastes containing these solder powders, the α ray count of the substrate after reflow heating and cleaning was also at most 0.5 cph/cm². The α ray count of the substrate was a value found by printing solder paste over the entire surface of three substrates measuring 300 x 300 mm and measuring the α ray count after 100 hours.

In contrast, the comparative examples of solder pastes had instances in which there was build-up on the squeegee during continuous printing. In addition, the total number of occurrences of voids was large compared to the examples of the present invention, the maximum void diameter was greater than 30 micrometers, and a large number of large-diameter voids having an adverse effect on the reliability of a substrate were formed. For example, even with low temperature solder D having a low peak heat absorption temperature, when a solvent having a relatively low TG-15 temperature like those used in the prior art and in Japanese Published Unexamined Patent Applications Hei 9-94691 and Hei 9-277081 was employed, a large number of large-diameter voids were formed, and voids could not be suppressed.

As explained above, if soldering is carried out by the reflow method using a solder paste according to the present invention, the formation of voids after reflow is suppressed, and the formation of large-diameter voids is prevented, so soldered joints having a stable strength are obtained. Accordingly, even with minute pads used in present-day miniaturized electronic equipment and electronic parts, a decrease in bonding strength due to variation in the actual bonding area does not occur, and electronic equipment and electronic parts of high reliability can be formed.

### Industrial Applicability

The present invention is ideal as a solder paste for forming bumps for substrates for modules such as BGA. For example, if a solder powder having a low α ray count of at most 0.5 cph/cm² is used as a solder powder of a solder paste, after reflow soldering and cleaning, soldered portions with a solder α ray count of at most 0.5 cph/cm² can be obtained, and even with modules containing memory IC's, electronic equipment without memory errors can be formed.

## Claims

1. A solder paste comprising a flux mixed with a solder powder, **characterized in that** the flux contains a solvent, and the solvent is a solvent for which the temperature at which the reduction in mass measured by the TG method is 15 mass % is at least 5°C above the peak heat absorption temperature of the solder.

2. A solder paste as set forth in claim 1 wherein the peak heat absorption temperature of the solder is 250 - 330 °C, and the solvent is one or two or more substances selected from vegetable oils and mineral oils.

3. A solder paste as set forth in claim 1, wherein the peak heat absorption temperature of the solder is 175 - 250°C, and the solvent is one or two or more substances selected from vegetable oils, mineral oils, liquid paraffin, isobornyl cyclohexanol, dioctyl phthalate, dioctyl sebacate, dibutyl sebacate, tetraethyelene glycol, and isohexadecanol.

4. A solder paste as set forth in claim 1, wherein the peak heat absorption temperature of the solder is less than 175°C, and the solvent is at least one substance selected from vegetable oils, mineral oils, liquid paraffin, isobornyl cyclohexanol, dioctyl phthalate, dioctyl sebacate, dibutyl sebacate, dibutyl phthalate, dibutyl maleate, and benzyl benzoate.

5. A solder paste as set forth in any of claims 2 - 4 wherein the vegetable oil is one or two or more substances selected from sunflower oil, olive oil, safflower oil, rapeseed oil, soybean oil, corn oil, tsubaki oil, peanut oil, perilla oil, sesame oil, rice oil, cottonseed oil, palm oil, avocado oil, and grapeseed oil.

6. A solder paste as set forth in any of claims 1-5 wherein the flux contains at most 30 mass % with respect to the overall solvent of a solvent for which the temperature at which the mass decrease as measured by the TG method is 15 mass % is lower than the peak heat absorption temperature of the solder.

7. A solder paste as set forth in any one of claims 1-6 wherein the flux is a rosin flux.
